# EUROPEAN PATENT SPECIFICATION

(11) **EP 1 975 000 B1**
(45) Date of publication and mention of the grant of the patent: **03.03.2010**
(21) Application number: 06810578.2
(22) Date of filing: 26.09.2006
(51) Int. Cl.: B60R 3/00, B60R 19/48, B60R 19/56, B62D 25/22

(54) **GETTING-ON/OFF STEP MOUNTING STRUCTURE OF VEHICLE**
BEFESTIGUNGSSTRUKTUR FÜR EIN-/AUSSTEIGE-STUFE FÜR FAHRZEUG
STRUCTURE DE MONTAGE DE MARCHEPIED POUR VÉHICULE

(30) Priority: 18.01.2006 JP 2006009470
(43) Date of publication of application: 01.10.2008
(73) Proprietor: Isuzu Motors Limited, Tokyo 140-8722 (JP)
(72) Inventor: YAMASHITA, Ken, Fujisawa-shi Kanagawa 252-8501 (JP); MASUNAGA, Shinji, Fujisawa-shi Kanagawa 252-8501 (JP)
(74) Representative: Müller - Hoffmann & Partner
(86) International application number: PCT/JP2006/319053
(87) International publication number: WO 2007/083414

(56) References cited:
- EP-A2- 1 600 335
- JP-A- 8 142 922
- JP-A- 07 237 502
- JP-A- 11 255 050
- JP-A- 2000 272 444
- JP-A- 2002 145 113
- JP-A- 2002 274 300
- JP-A- 2002 370 595
- JP-A- 2003 011 753
- US-B1- 6 652 010

## Description

### TECHNICAL FIELD

The present invention relates to a passenger step mounting structure for a vehicle.

### BACKGROUND ART

It is known to mount a first step at a position forward of the front tires of a heavy-duty vehicle, such as a truck. When a passenger gets into or out of the cab of the vehicle, the first step serves as a foothold for the passenger. A step bracket that supports the first step is fixed to a frame of the vehicle in order to avoid collision of the step bracket with any of the front tires during cab tilt.

Patent Document 1: Japanese Patent Application Publication No. 2002-301990
JP 2002 274300 A discloses a passenger step mounting structure for a vehicle according to the preamble of claim 1 with a front underrun protector which is supported by a fitting stay being fixed to a main frame of a car body. Further, an elevating step is fixed to the fitting stay.
JP 2003 011753 A discloses a similar step structure which is attached to a bracket which supports a front underrun protector.

### DISCLOSURE OF THE INVENTION

### PROBLEM TO BE SOLVED BY THE INVENTION

Here, in order to place the step bracket such that it cannot be an obstacle to other structural members (for example, a steering-related structural member), it is necessary to provide an intermediate bracket to which the step bracket is to be joined, on a lower portion of the frame.

However, additional provision of the intermediate bracket to which the step bracket is to be joined makes the structure for mounting the passenger step more complicated.

Moreover, the step bracket is supported at one end thereof by the intermediate bracket, like a cantilever, while the weight of a passenger is imposed on the other end thereof as a load through the first step. Accordingly, the intermediate bracket needs to be rigid enough to withstand such a load. Incidentally, the rigidity of the intermediate bracket can be increased by measures including thickening members of the intermediate bracket itself, and providing a reinforcement structure to the intermediate bracket. However, any of these measures increases the weight of the intermediate bracket.

Furthermore, in a structure where the rigidity of the intermediate bracket is increased equivalent to or higher than that of the frame, most of the load transferred from the step bracket to the intermediate bracket is transmitted to the frame. Accordingly, the load may possibly deform the frame, and thereby affect the durability of the vehicle. To avoid such a disadvantage, it is necessary to mount, on the vehicle, another reinforcement structure for securing the rigidity in the lateral direction of the vehicle (vehicle width direction), thereby reducing the load to be supported by the frame. This also makes the structure for mounting the passenger step more complicated.

In view of such circumstances, an object of the present invention is to provide a passenger step mounting structure for a vehicle, having enough mounting strength without making the passenger step mounting structure heavier or more complicated.

### MEANS FOR SOLVING THE PROBLEM

The problem is solved by a passenger step mounting structure according to claim 1.
To achieve the above object, a passenger step mounting structure for a vehicle according to the present invention includes a frame, a front underrun protector bracket, and a step bracket.

The front underrun protector bracket is placed below the frame and supports the front underrun protector from its back. The step bracket has: a first end potion which is attached to and supported by the front underrun protector bracket; and a second end portion which supports a first step. The step bracket extends outwards in the vehicle width direction from the first end portion to the second end portion.

In the above configuration, the step bracket, which supports the first step, is attached to and supported by the front underrun protector bracket. The front underrun protector bracket supports the front underrun protector from its back relative to the vehicle. When a passenger car crashes head-on into the front of the vehicle, the front underrun protector prevents the passenger car from sliding under the vehicle, and thereby' allows a shock-absorbing function of the passenger car to effectively work.

In other words, since the step bracket is connected to the front underrun protector bracket, which is originally rigid enough to withstand a collision impact, the step bracket can be mounted with sufficient strength without any additional rigid member for supporting the step bracket. Accordingly, the present invention can provide a passenger step mounting structure for a vehicle, having enough mounting strength without making the passenger step mounting structure heavier or more complicated.

Moreover, in a vehicle with a high ride height, such as a heavy-duty vehicle, a first step is placed at a position far lower than a frame. Thus, when the step bracket is connected directly to the frame, the length of the step bracket needs to be increased in proportion to the distance, in the height direction, between the first step and the frame. However, the increase of the length of the step bracket is undesirable since it leads to the increase of the load imposed on parts supporting the step bracket.

In this regard, in the above configuration, the first end portion of the step bracket is connected to the front underrun protector bracket which is placed below the frame, the length (the distance from the first end portion to the second end potion) of the step bracket can be made shorter than the case where the step bracket is connected directly to the frame.

Moreover, the front underrun protector bracket may include: a first lateral side part to which the first end portion of the step bracket is connected; a second lateral side part placed closer to the center, in the vehicle width direction, of the frame than the first lateral side part with a space between the first and second lateral side parts; and a joint part arranged along the vehicle width direction and connecting the first lateral side part and the second lateral side part.

Since the front underrun protector bracket supports the front underrun protector from its back relative to the vehicle, the rigidity, in the vehicle front-rear direction, of the front underrun protector bracket is set high, but the rigidity, in the vehicle width direction, of the front underrun protector bracket is not always set high.

In this regard, in the above configuration, the first lateral side part to receive the load from the step bracket is connected to the second lateral side part by the joint part arranged along the vehicle width direction, so that the rigidity, in the vehicle width direction, of the front underrun protector bracket is reinforced by the joint part. Accordingly, with a simple structure having the joint part provided to the front underrun protector bracket, the mounting strength of the first step can be further increased.

Moreover, the aforementioned joint part may be formed of a plate-like member.

In the above configuration, the joint part can be easily formed of a plate-like member.

In this case, the joint part may have any shape as long as it surely has a sufficient rigidity in the vehicle width direction, and thus may have a cylindrical shape having an enclosed space defined therein, or a shape formed by partially opening a cylindrical shape (for example, a U-shape in the cross section).

### EFFECT OF THE INVENTION

The present invention provides a passenger step mounting structure for a vehicle, having enough mounting strength without making the passenger step mounting structure heavier or more complicated.

### BRIEF DESCRIPTION OF THE DRAWINGS

[Fig. 1] Fig. 1 is a perspective view of a passenger step mounting structure for a vehicle according to an embodiment.
[Fig. 2] Fig. 2 is a side view of Fig. 1.
[Fig. 3] Fig. 3 is a plan view of Fig. 1.
[Fig. 4] Fig. 4 is a rear view schematically showing the main part of Fig. 1.
[Fig. 5] Fig. 5 is a bottom view of Fig. 4 as viewed from a direction of the arrow V.

### EXPLANATION OF REFERENCE NUMERALS

- 1: vehicle
- 3: passenger step mounting structure
- 4: frame
- 8: step bracket
- 10: front underrun protector bracket
- 11: side member
- 12: cross member
- 20: peripheral wall part (joint part)
- 21: side wall part (first lateral side part)
- 22: side wall part (second lateral side part)
- 27: front underrun protector
- 33: flange part (first end portion of step bracket)
- 34: step support part (second end portion of step bracket)
- 35: arm part
- 37: first step

### BEST MODE FOR CARRYING OUT THE INVENTION

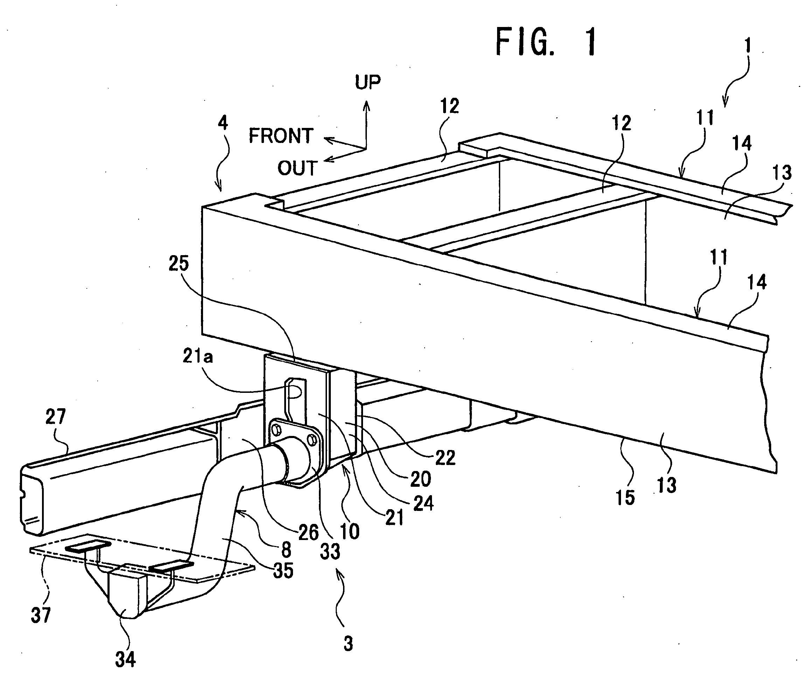

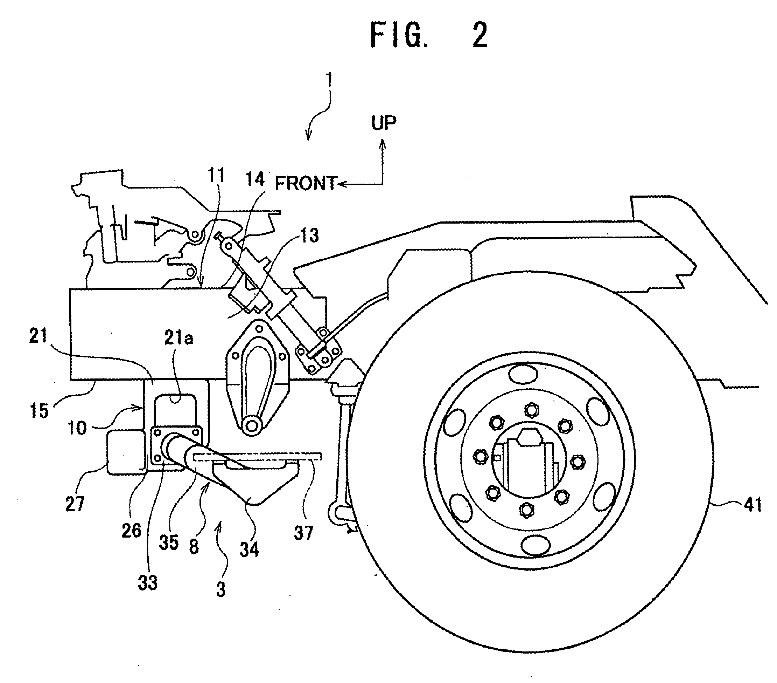

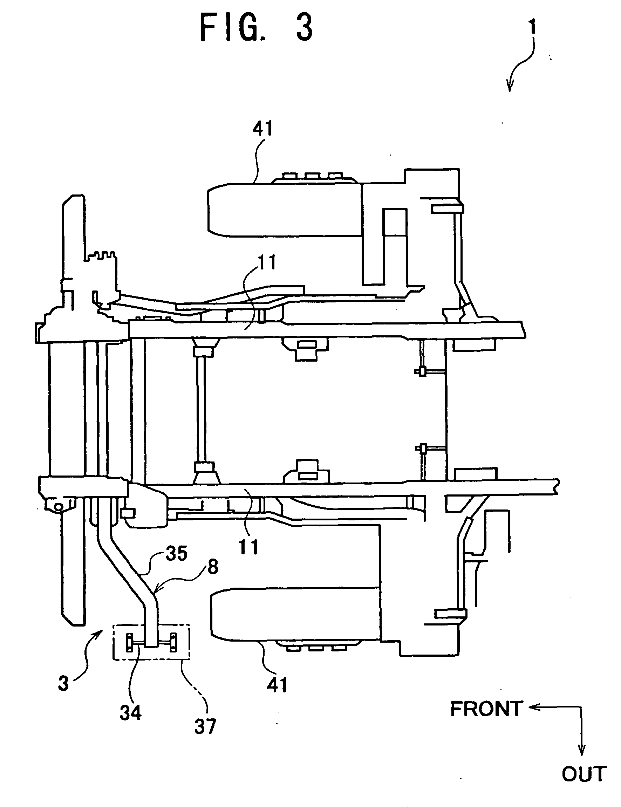

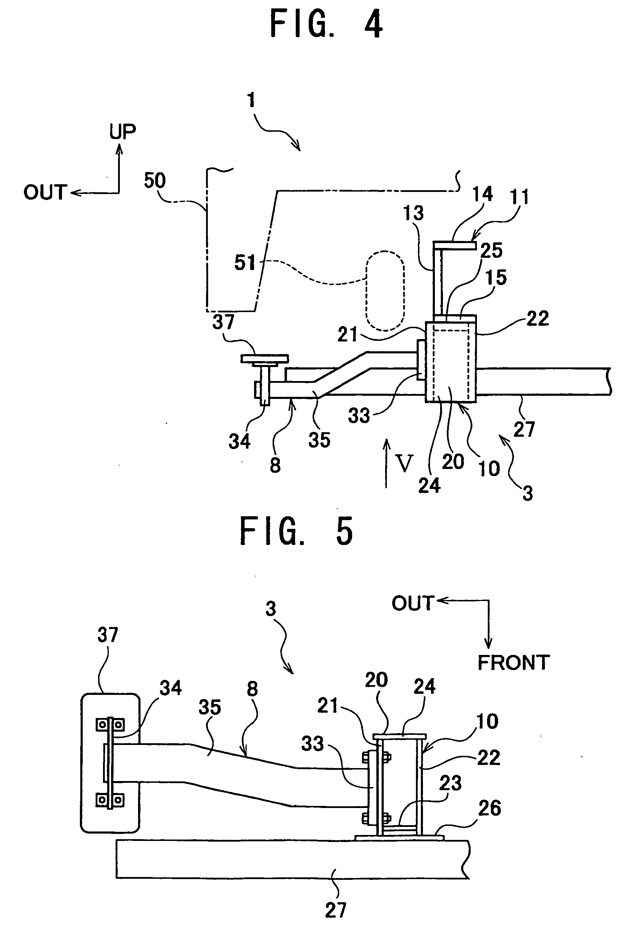

Hereinafter, an embodiment of the present invention will be described with reference to the drawings. Fig. 1 is a perspective view of a passenger step mounting structure for a vehicle according to the embodiment. Fig. 2 is a side view of Fig. 1. Fig. 3 is a plan view of Fig. 1. Fig. 4 is a rear view schematically showing the main part of Fig. 1. Fig. 5 is a bottom view of Fig. 4 as viewed in the direction of the arrow V. Note that, "FRONT" in the drawings indicates the front direction of the vehicle, "UP" in the drawings indicates the upward direction of the vehicle, and "OUT" in the drawings indicates an outer side in a vehicle width direction. addition, right and left directions in the following description indicate right and left directions as facing in the front direction of the vehicle.

A vehicle 1 according to the embodiment is a cab-over type vehicle in which most part of a cab (not shown) is located forward of an engine (not shown). The vehicle 1 is provided with a passenger step mounting structure 3 on a side of the front portion thereof. Note that a driver's seat of the vehicle 1 is arranged on the left side in the cab (cabin).

As shown in Figs. 1 to 5, the passenger step mounting structure 3 includes a frame 4, a step bracket 8, and front underrun protector brackets 10.

The frame 4 includes right and left side members 11 and multiple cross members 12. The right and left side members 11 extend in the front-rear direction of the vehicle, respectively on both sides, in the vehicle width direction, of the frame 4. Each side member 11 has a substantially squared-U-shape in its cross section, and includes a side wall part 13, an upper wall part 14 and a bottom wall part 15. The upper and bottom wall parts 14 and 15 extend respectively from the upper and lower ends of the side wall part 13 toward the center, in the vehicle width direction, of the frame 4, while facing each other. The both ends of each cross member 12 are joined respectively to the right and left side members 11, thereby connecting the right and left side members 11 to each other.

The front underrun protector brackets 10 are fixed respectively to front end portions, located forward of the front wheels 41, of the right and left side members 11. Each of the front underrun protector brackets 10 includes a peripheral wall part 20 as a joint part, a side wall part 21 as a first lateral side part, and a side wall part 22 as a second lateral side part. In a center portion of the side wall part 21, an opening 21a is formed. The side wall part 22 is placed away from the side wall part 21 in the vehicle width direction, and the peripheral wall part 20 is arranged along the vehicle width direction. Each peripheral wall part 20 has an substantially U-shape with a bottom opening in its cross section, and includes a front panel part 23, a rear panel part 24 and an upper panel part 25, each of which is made of a plate-like member. The upper panel part 25 is fastened onto an outer surface (lower surface) of the bottom wall part 15 of the corresponding side member 11. The front panel part 23 and the rear panel part 24 extend downwards respectively from the front and rear ends of the upper panel part 25, while facing each other. The side wall parts 21 and 22 are placed in the outer and inner sides, in the vehicle width direction, to the peripheral wall part 20. The side wall part 21 is joined onto the outer side edge, in the vehicle width direction, of the peripheral wall part 20, while the side wall part 22 is joined onto the inner side edge, in the vehicle width direction, of the peripheral wall part 20. Thereby, the peripheral wall part 20 connects the two side wall parts 21 and 22 to each other, and accordingly the front underrun protector bracket 10 has a substantially box shape with a bottom opening. Note that the peripheral wall may have a rear opening instead of the bottom opening, or may have no opening. Moreover, in place of the peripheral wall, each front underrun protector bracket 10 may include a tubular member or a bar-like member.

The front panel part 23 of each front underrun protector bracket 10 is provided with a front underrun protector support part 26, and a front underrun protector 27 extending in the vehicle width direction is fixed to the front underrun protector support parts 26. When a passenger car crashes head-on into the front of the vehicle 1, the front underrun protector 27 prevents the passenger car from sliding under the vehicle 1, and thereby allows a shock-absorbing function of the passenger car to effectively work.

The step bracket 8 includes a flange part 33 as a first end portion, a step support part 34 as a second end portion, and an arm part 35. The flange part 33 and the step support part 34 are fixed respectively to first and second ends of the arm part 35. The flange part 33 is fixedly fastened onto an outer surface of the side wall part 21 of one of the front underrun protector brackets 10, and thereby the step bracket 8 is fixed to the corresponding one of the side members 11 with the front underrun protector bracket 10 interposed therebetween. The arm part 35 extends from the first end to the second end, firstly outwards in the vehicle width direction, then diagonally rearward and downward, and lastly outwards in the vehicle width direction again. A first step 37 is mounted on, and fixedly fastened to, the step support part 34. The first step 37 is located, as shown in Fig. 4, closer to the center, in the vehicle width direction, of the vehicle 1 than a neighboring lateral side 50 of the cab. When a passenger of the vehicle 1 gets into or out of the cab (cabin) above the side members 11, the first step 37 serves as a foothold for the passenger. Note that a region 51 indicated by a broken line in Fig. 4 is a region in which steering-related structural members are to be placed, and the step bracket 8 is placed such that it cannot be an obstacle to the steering-related structural members. The first step 37 may alternatively be placed in such a manner that the tip edge, on the outer side, in the vehicle width direction, of the first step 37 is located vertically beneath the lateral side 50 of the cab.

According to the embodiment, the step bracket 8, which supports the first step 37, is connected to and supported by one of the front underrun protector brackets 10. The front underrun protector brackets 10 support the front underrun protector 27 from its back relative to the vehicle. When a passenger car crashes head-on into the front of the vehicle 1, the front underrun protector 27 prevents the passenger car from sliding under the vehicle 1, and thereby allows a shock-absorbing function of the passenger car to effectively work.

As described above, the step bracket 8 is connected to one of the front underrun protector brackets 10, which are originally rigid enough to withstand a collision impact. For this reason, the step bracket 8 can be mounted with sufficient strength without any additional rigid member for supporting the step bracket 8. Accordingly, it is possible to provide the passenger step mounting structure 3 for a vehicle, having enough mounting strength without making the passenger step mounting structure 3 heavier or more complicated.

Moreover, in a vehicle with a high ride height, such as a heavy duty vehicle, the first step 37 is placed at a position far lower than the side members 11. Thus, when the step bracket 8 is connected directly to any of the side members 11, the length of the step bracket 8 (length of the arm part 35) needs to be increased in proportion to the distance, in the height direction, between the first step 37 and the side members 11. However, the increase of the length of the step bracket 8 is undesirable since it leads to the increase of the load imposed on parts supporting the step bracket 8.

In this regard, in the embodiment, the flange part 33 of the step bracket 8 is connected to one of the front underrun protector brackets 10 which are placed below the side members 11, the length of the arm part 35 of the step bracket 8 can be made shorter than the case where the step bracket 8 is connected directly to any of the side members 11.

Furthermore, in general, since the front underrun protector brackets 10 are parts supporting the front underrun protector 27 from its back relative to the vehicle, the rigidity, in the vehicle front-rear direction, of each front underrun protector bracket 10 is set high, but the rigidity, in the vehicle width direction, of the front underrun protector bracket 10 is not always set high.

In this regard, in the embodiment, the side wall part 21 to receive the load from the step bracket 8 is connected to the side wall part 22 by the peripheral wall part 20 arranged along the vehicle width direction, so that the rigidity in the vehicle width direction, of each front underrun protector bracket 10 is reinforced by the peripheral wall part 20. Accordingly, with a simple structure where each of the front underrun protector brackets 10 is provided with the peripheral wall part 20, which can be easily formed with a plate-like member, the mounting strength of the first step 37 can be further increased.

Hereinabove, the description has been given of the embodiment to which the invention made by the present inventor is applied. However, the present invention is not limited by the description and drawings forming part of the disclosure of the present invention according to the embodiment. In other words, it is added that other embodiments, practical examples, operation techniques and the like that are implemented by those skilled in the art on the basis of the present embodiment should naturally all be included in the scope of the present invention.

### INDUSTRIAL APPLICABILITY

The mounting structure of the present invention is applicable to various types of vehicles provided with a passenger step.

## Claims

1. A passenger step mounting structure for a vehicle including
a frame (4),
a front underrun protector bracket (10) and
a step bracket (8), wherein
the front underrun protector bracket is placed below the frame and is supporting a front underrun protector (27) from its back;
the front underrun protector extends in a vehicle width direction, and
a first step (37) is supported by the front underrun protector bracket (10) with the step bracket (8) interposed therebetween,
**characterized in that**,
the step bracket (8) includes a first end portion (33) which is connected to and supported by the front underrun protector bracket and a second end portion (34) which supports the first step (37),
the step bracket (8) extends outwards in a vehicle width direction from the first end portion to the second end portion (34),
the front underrun protector bracket (10) includes: a first lateral side part (21) to which the first end portion (33) of the step bracket (8) is connected; a second lateral side part (22) placed closer to the center, in the vehicle width direction, of the frame (4) than the first lateral side part (21) with a space between the first and second lateral side parts (21, 22); and a joint part (20) arranged along the vehicle width direction, and connecting the first lateral side part (21) and the second lateral side part (22),
the joint part (20) includes a front panel part (23), a rear panel part (24) and an upper panel part (25),
the upper panel part (25) is fastened onto a lower surface (15) of the frame (4),
the front panel part (23) and the rear panel part (24) extend downwards respectively from the front and the rear ends of the upper panel part (25),
the front panel part (23) connects the first lateral side part (21) and the second lateral side part (22) in front of the first end portion (33) of the step bracket (8); and
the rear panel part (24) connects the first lateral side part (21) and the second lateral side part (22) in rear of the first end portion (33) of the step bracket (8).

2. The passenger step mount structure for a vehicle according to claim 1, **characterized in that** the joint part is formed of a plate-like member.

## Patentansprüche

1. Befestigungsstruktur für eine Fahrgaststufe für ein Fahrzeug, mit:
einem Rahmen (4),
einem Träger (10) für einen vorderen Unterfahrschutz und
einen Stufenträger (8),
wobei:
der Träger für den vorderen Unterfahrschutz unterhalb des Rahmens angeordnet ist und einen vorderen Unterfahrschutz (27) von dessen Rückseite her trägt,
sich der vordere Unterfahrschutz in einer Breitenrichtung des Fahrzeugs erstreckt und
eine erste Stufe (37) vom Träger (10) für den vorderen Unterfahrschutz getragen wird, wobei der Stufenträger (8) dazwischen angeordnet ist,
**dadurch gekennzeichnet,**
**dass** der Stufenträger (8) einen ersten Endbereich (33), welcher mit dem Träger für den vorderen Unterfahrschutz verbunden ist und von diesem getragen wird, und einen zweiten Endbereich (34) aufweist, welcher die erste Stufe (37) trägt,
**dass** der Stufenträger (8) sich in einer Breitenrichtung des Fahrzeugs vom ersten Endbereich zum zweiten Endbereich (34) auswärts erstreckt,
**dass** der Träger (10) für den vorderen Unterfahrschutz aufweist: ein erstes laterales Seitenteil (21), mit welchem der erste Endbereich (33) des Stufenträgers (8) verbunden ist, ein zweites laterales Seitenteil (22), welches in der Breitenrichtung des Fahrzeugs näher zur Mitte des Rahmens (4) hin angeordnet ist, als das erste laterale Seitenteil (21), wobei ein Abstand zwischen den ersten und den zweiten lateralen Seitenteilen (21, 22) ausgebildet ist, und einen Verbindungsteil (20), welches entlang der Breitenrichtung des Fahrzeugs angeordnet ist und das erste laterale Seitenteil (21) und das zweite laterale Seitenteil (22) verbindet,
**dass** der Verbindungsteil (20) einen vorderen Plattenteil (23), einen hinteren Plattenteil (24) und einen oberen Plattenteil (25) aufweist,
**dass** der obere Plattenteil (25) auf einer unteren Fläche (15) des Rahmens (4) angebracht ist,
**dass** der vordere Plattenteil (23) und der hintere Plattenteil (24) sich von den vorderen bzw. von den hinteren Enden des oberen Plattenteils (25) nach unten erstrecken,
**dass** der vordere Plattenteil (23) das erste laterale Seitenteil (21) und das zweite laterale Seitenteil (22) vor dem ersten Endbereich (33) des Stufenträgers (8) verbindet und
**dass** der hintere Plattenteil (24) das erste laterale Seitenteil (21) und das zweite laterale Seitenteil (22) hinter dem ersten Endbereich (33) des Stufenträgers (8) verbindet.

2. Befestigungsstruktur für eine Fahrgaststufe für ein Fahrzeug nach Anspruch 1,
**dadurch gekennzeichnet,**
**dass** der Verbindungsteil als plattenartiges Element ausgebildet ist.

## Revendications

1. Structure de montage de marchepied pour un véhicule, comprenant
un châssis (4),
un support avant de protection contre l'encastrement (10) et
un support de marchepied (8), étant précisé
que le support avant de protection contre l'encastrement est placé sous le châssis et supporte un dispositif avant de protection contre l'encastrement (27) par l'arrière;
que le dispositif avant de protection contre l'encastrement s'étend dans le sens de la largeur du véhicule, et
qu'un premier marchepied (37) est supporté par le support avant de protection contre l'encastrement (10), le support de marchepied (8) étant placé entre les deux,
**caractérisée en ce que**
le support de marchepied (8) comprend une première partie d'extrémité (33) qui est reliée au support avant de protection contre l'encastrement et qui est supportée par celui-ci, et une seconde partie d'extrémité (34) qui supporte le premier marchepied (37),
le support de marchepied (8) s'étend vers l'extérieur dans le sens de la largeur du véhicule, de la première partie d'extrémité à la seconde partie d'extrémité (34),
le support avant de protection contre l'encastrement (10) comprend: une première partie latérale (21) à laquelle est reliée la première partie d'extrémité (33) du support de marchepied (8) ; une seconde partie latérale (22) qui est placée plus près du centre du châssis (4), dans le sens de la largeur du véhicule, que la première partie latérale (21), avec un espace entre les première et seconde parties latérales (21, 22) ; et une partie de liaison (20) qui est disposée le long du sens de la largeur du véhicule et qui relie la première partie latérale (21) et la seconde partie latérale (22),
la partie de liaison (20) comprend une partie avant en tôle (23), une partie arrière en tôle (24) et une partie supérieure en tôle (25),
la partie supérieure en tôle (25) est fixée à une surface inférieure (15) du châssis (4),
la partie avant en tôle (23) et la partie arrière en tôle (24) s'étendent vers le bas à partir des extrémités avant et arrière, respectivement, de la partie supérieure en tôle (25),
la partie avant en tôle (23) relie la première partie latérale (21) et la seconde partie latérale (22) devant la première partie d'extrémité (33) du support de marchepied (8) ; et
la partie arrière en tôle (24) relie la première partie latérale (21) et la seconde partie latérale (22) derrière la première partie d'extrémité (33) du support de marchepied (8).

2. Structure de montage de marchepied pour un véhicule selon la revendication 1, **caractérisée en ce que** la partie de liaison se compose d'un élément en forme de plaque.
